# EUROPEAN PATENT APPLICATION

(11) **EP 4 836 056 A1**
(43) Date of publication of application: **04.11.2026**
(21) Application number: 24910106.4
(22) Date of filing: 30.09.2024
(51) Int. Cl.: H01M 10/0566, H01M 10/054

(54) **SODIUM ION BATTERY ELECTROLYTE, SODIUM ION BATTERY AND ELECTRICAL DEVICE**

(30) Priority: 27.12.2023 CN 202311834197
(71) Applicant: BYD Company Limited, Shenzhen, Guangdong 518118 (CN)
(72) Inventor: LI, Song, Shenzhen, Guangdong 518118 (CN); ZENG, Wei, Shenzhen, Guangdong 518118 (CN); SONG, Xin, Shenzhen, Guangdong 518118 (CN); JIN, Lina, Shenzhen, Guangdong 518118 (CN); LI, Xiangyu, Shenzhen, Guangdong 518118 (CN)
(74) Representative: Gunzelmann, Rainer
(86) International application number: PCT/CN2024/122739
(87) International publication number: WO 2025/139164

(57) **Abstract**

A sodium ion battery electrolyte, a sodium ion battery and an electrical device. The sodium ion battery electrolyte comprises a sodium salt and a sulfonate compound, and the sulfonate compound comprises one or more of compounds represented by formula (I), formula (II) and formula (III), wherein R₁, R₅, R₆, R₉ and R₁₀ are each selected from C₁-C₃ alkylene groups, and R₂, R₃, R₄, R₇, R₈ and R₁₁ are each selected from C₁-C₃ alkyl groups or C₁-C₃ fluoroalkyl groups. The sulfonate compound contains both a sulfonate group and a carbonate group in the molecules, and thus can be used as a film-forming additive to promote generation of a uniform and stable SEI film rich in sulfates and sulfites on the surface of an electrode, thereby improving the cycle performance and the rate capability of the sodium ion battery..

## Description

This application claims priority to Chinese Patent Application No. 202311834197.4, filed with the China National Intellectual Property Administration on December 27, 2023 and entitled "SODIUM-ION BATTERY ELECTROLYTE SOLUTION, SODIUM-ION BATTERY, AND ELECTRICAL DEVICE", which is incorporated herein by reference in its entirety.

### TECHNICAL FIELD

This disclosure relates to the field of sodium-ion battery technologies, and in particular, to a sodium-ion battery electrolyte solution, a sodium-ion battery, and an electrical device.

### BACKGROUND

Sodium-ion batteries, as a supplement or replacement for lithium-ion batteries, have application prospects and value in a variety of scenarios, such as large-scale energy storage, small-scale home storage, and powered forklifts. In a sodium-ion battery system, an electrolyte solution plays a crucial role as an intermediate bridge connecting positive and negative electrode materials, and addition of functional molecules can improve overall performance of a battery. Currently, a common practice is to add an organic sulfur-containing compound additive to the electrolyte solution to promote formation of a stable solid electrolyte interphase (SEI) film at positive and negative electrodes, thereby improving cycle performance of the battery. However, existing organic sulfur-containing compound additives have limited effect on improving battery cycle performance. Furthermore, because commonly used carbonate electrolyte solution solvents have high solubility for SEI film of sodium-ion batteries, battery capacity is likely to gradually decrease during continuous charging and discharging, leading to a deterioration in battery cycle performance. Therefore, it is necessary to improve electrolyte solutions of sodium-ion batteries to enhance cycle performance of the batteries.

### SUMMARY

Based on this, embodiments of this disclosure provide a sodium-ion battery electrolyte solution, including a sulfonate ester compound. The compound includes both sulfonate and carbonate groups in its molecular structure, and not only can act as a film-forming additive to promote formation of a uniform and stable SEI film rich in sulfate and sulfite on an electrode surface but also can be used as a solvent to effectively dissolve sodium salts and transport sodium-ions. Furthermore, due to a low dielectric constant and low solubility for the SEI film, the compound can inhibit corrosion of the SEI film by the electrolyte solution, thereby improving cycle performance and rate performance of a sodium-ion battery.

According to a first aspect, an embodiment of this disclosure provides a sodium-ion battery electrolyte solution. The sodium-ion battery electrolyte solution includes a sodium salt and a sulfonate ester compound, where the sulfonate ester compound includes one or more of compounds shown in formula (I), formula (II), and formula (III): 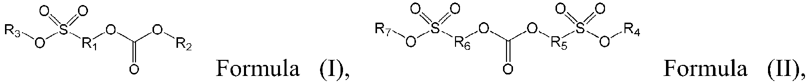 and 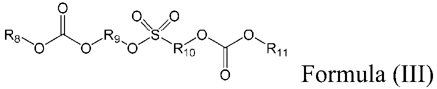 where R₁, R₅, R₆, R₉ and R₁₀ are selected from C₁-C₃ alkylene groups, and R₂, R₃, R₄, R₇, R₈ and R₁₁ are selected from C₁-C₃ alkyl groups or C₁-C₃ fluoroalkyl groups.

In an implementation of this disclosure, the C₁-C₃ alkylene group is -CH₂-, -CH₂CH₂-, or -C(CH₃)₂-; the C₁-C₃ alkyl group is -CH₃, -CH₂CH₃, -CH₂CH₂CH₃, or -CH(CH₃)₂, and the C₁-C₃ fluoroalkyl group is -CF₃, -CHF₂, or -CH₂F.

In an implementation of this disclosure, a volume percentage of the sulfonate ester compound in the sodium-ion battery electrolyte solution ranges from 0.1% to 20%.

In an implementation of this disclosure, in the sodium-ion battery electrolyte solution, a volume percentage of a compound shown in formula (I) ranges from 0% to 20%; a volume percentage of a compound shown in formula (II) ranges from 0% to 10%; and a volume percentage of a compound shown in formula (III) ranges from 0% to 10%.

In an implementation of this disclosure, the sodium salt includes one or more of sodium hexafluorophosphate, sodium perchlorate, sodium bis(trifluoromethanesulfonyl)imide, sodium bis(fluorosulfonyl)imide, sodium trifluoromethanesulfonate, sodium difluorooxalateborate, sodium bis(oxalateborate), sodium hexafluoroarsenate, sodium tetrafluoroborate, sodium nitrate, and sodium chloride.

In an implementation of this disclosure, a concentration of the sodium salt in the sodium-ion battery electrolyte solution ranges from 0.1 mol/L to 10 mol/L.

In an implementation of this disclosure, the sodium-ion battery electrolyte solution further includes one or more of a solvent, an additive, and a diluent.

The solvent includes one or more of ethylene carbonate, propylene carbonate, dimethyl carbonate, diethyl carbonate, methyl ethyl carbonate, ethylene glycol dimethyl ether, diethylene glycol dimethyl ether, triethylene glycol dimethyl ether, 1,3-dioxolane, methyl acetate, ethyl acetate, ethyl propionate, propyl propionate, dimethyl sulfoxide, tetrahydrofuran, acetonitrile, and N,N-dimethylformamide.

The additive includes one or more of fluoroethylene carbonate, vinylene carbonate, 1,3-propane sultone, propylene sulfate, prop-1-ene-1,3-sultone, ethylene sulfate, methylene methanedisulfonate, succinonitrile, adiponitrile, tris(trimethylsilane) phosphite, trimethyl phosphate, and ethoxy(pentafluoro)cyclotriphosphazene.

The diluent includes one or more of 1,1,2,2-tetrafluoroethyl-2,2,2-trifluoroethyl ether, 1,1,2,2-tetrafluoroethyl-2,2,3,3-tetrafluoropropyl ether and bis(2,2,2-trifluoroethyl) ether.

In an implementation of this disclosure, in the sodium-ion battery electrolyte solution, a volume percentage of the solvent ranges from 40% to 99%; a volume percentage of the additive ranges from 1% to 20%; and a volume percentage of the diluent ranges from 0 to 45%.

The sodium-ion battery electrolyte solution provided in this embodiment of this disclosure includes a sulfonate ester compound. The compound has both sulfonate and carbonate groups in its molecule, and not only can act as a film-forming additive in the sodium-ion battery electrolyte solution to promote formation of a uniform and stable SEI film rich in sulfate and sulfite on an electrode surface, but also can be used as a solvent in the sodium-ion battery electrolyte solution to effectively dissolve sodium salts and transport sodium-ions. Furthermore, due to a low dielectric constant and low solubility for the SEI film, the compound can inhibit corrosion of the SEI film by the electrolyte solution, thereby improving cycle performance and rate performance of a sodium-ion battery.

According to a second aspect, an embodiment of this disclosure provides a sodium-ion battery, including a positive electrode, a negative electrode, a separator located between the positive electrode and the negative electrode, and an electrolyte solution, where the electrolyte solution includes the sodium-ion battery electrolyte solution according to the first aspect.

The electrolyte solution of the sodium-ion battery provided in this embodiment of this disclosure includes a sulfonate ester compound, which can promote formation of a uniform and stable SEI film on a surface of the battery electrode. In addition, the SEI film has good corrosion resistance, which helps suppress generation of side reactions and loss of active lithium, thereby improving a cycle life and rate performance of the battery.

According to a third aspect, an embodiment of this disclosure further provides an electrical device, where the electrical device includes the sodium-ion battery according to the second aspect.

The electrical device provided in this embodiment of this disclosure includes the sodium-ion battery according to the second aspect. This sodium-ion battery has a long cycle life and good rate performance, allowing the electrical device to be used stably for a long time, thereby helping improve use performance of the electrical device.

### BRIEF DESCRIPTION OF THE DRAWINGS

FIG. 1 is a cycle performance diagram of a sodium-ion battery at a current density of 1C according to Example 4 of this disclosure;
FIG. 2 is a cycle performance diagram of a sodium-ion battery at a current density of 1C according to Example 6 of this disclosure;
FIG. 3 is a cycle performance diagram of a sodium-ion battery at a current density of 1C according to Comparative Example 3 of this disclosure;
FIG. 4 shows an XPS S2p spectrum of sulfur on a positive electrode surface of a sodium-ion battery according to Example 6 of this disclosure;
FIG. 5 shows an XPS S2p spectrum of sulfur on a negative electrode surface of a sodium-ion battery according to Example 6 of this disclosure;
FIG. 6 shows an XPS C1s spectrum of carbon on a positive electrode surface of a sodium-ion battery according to Example 6 of this disclosure;
FIG. 7 shows an XPS C1s spectrum of carbon on a negative electrode surface of a sodium-ion battery according to Example 6 of this disclosure;
FIG. 8 shows an XPS S2p spectrum of sulfur on a positive electrode surface of a sodium-ion battery according to Comparative Example 3 of this disclosure;
FIG. 9 shows an XPS S2p spectrum of sulfur on a negative electrode surface of a sodium-ion battery according to Comparative Example 3 of this disclosure;
FIG. 10 is three-dimensional distribution diagrams of Na₂SO₄ in a negative electrode SEI film of a sodium-ion battery according to Example 6 and Comparative Example 3 of this disclosure;
FIG. 11 is a schematic diagram of a battery according to an embodiment of this disclosure; and
FIG. 12 is a schematic diagram of an electrical device according to an embodiment of this disclosure.

Reference numerals: battery 60, positive electrode 61, negative electrode 63, separator 65, electrolyte solution 67, electrical device 70.

### DESCRIPTION OF EMBODIMENTS

The following describes embodiments of this disclosure with reference to the accompanying drawings in embodiments of this disclosure.

In recent years, with large-scale commercial application of lithium-ion batteries, shortage of lithium resource reserves and rising prices have attracted people's attention. Sodium-ion batteries have a promising future in large-scale energy storage apparatus application due to their abundant sodium reserves, considerable energy density, and low costs. Sodium-ion batteries and lithium-ion batteries are similar in principle and process. Most development of sodium-ion batteries has adopted development experience of lithium-ion batteries. However, even so, sodium-ion batteries still have significant differences from lithium-ion batteries in many aspects, especially in terms of electrolyte solutions. Currently, a common practice is to add an organic sulfur-containing compound additive to the electrolyte solution to promote formation of a stable solid electrolyte interphase (SEI) film at positive and negative electrodes, thereby improving cycle performance of the battery. However, existing organic sulfur-containing compound additives have limited effect on improving battery cycle performance. Furthermore, because commonly used carbonate electrolyte solution solvents have high solubility for SEI film of sodium-ion batteries, battery capacity is likely to gradually decrease during continuous charging and discharging, leading to a deterioration in battery cycle performance. Therefore, it is necessary to improve electrolyte solutions of sodium-ion batteries to enhance cycle performance of the batteries.

Based on this, an embodiment of this disclosure provides a sodium-ion battery electrolyte solution. The sodium-ion battery electrolyte solution includes a sodium salt and a sulfonate ester compound, where the sulfonate ester compound includes one or more of compounds shown in formula (I), formula (II), and formula (III): 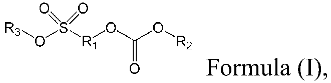 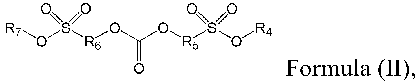 and 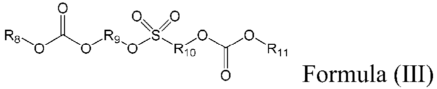 where R₁, R₅, R₆, R₉ and R₁₀ are selected from C₁-C₃ alkylene groups, and R₂, R₃, R₄, R₇, R₈ and R₁₁ are selected from C₁-C₃ alkyl groups or C₁-C₃ fluoroalkyl groups.

The sulfonate ester compound provided in this embodiment of this disclosure acts as both a film-forming additive and a solvent, to promote formation of a uniform and stable SEI film on an electrode surface, thereby improving cycle stability and rate performance of a battery. Specifically, this sulfonate ester compound includes both sulfonate and carbonate groups, and can act as both sulfonate and carbonate film-forming additive. This sulfonate ester compound may decompose to form sulfate, sulfite, and carbonate, which can stabilize the SEI film. A uniform and stable SEI film facilitates rapid transport of charges and ions, which can prevent excessive electrolyte consumption and loss, reducing concentration gradients in the electrolyte, and further preventing damage and dissolution of electrode materials. In this way, a sodium-ion battery with high rate performance and a long life is obtained. Furthermore, this sulfonate ester compound can act as a carbonate ester solvent to effectively dissolve sodium salts and transport sodium-ions. Compared with a conventional carbonate ester solvent, this sulfonate ester compound has a linear structure, a lower dielectric constant, and less solubility for the SEI film, inhibiting corrosion of the SEI film by the electrolyte solution and improving electrode structural stability. In addition, the linear structure of the sulfonate ester compound has lower impedance. This can improve battery efficiency, reduce energy loss, enhance discharge performance, and extend a battery cycle life.

In an implementation of this disclosure, the C₁-C₃ alkylene group refers to an alkylene group having 1 to 3 carbon atoms. Specifically, the C₁-C₃ alkylene group may be -CH₂-, -CH₂CH₂-, -CH(CH₃)-, -CH₂CH₂CH₂-, -CH(CH₃)CH₂-, -CH₂CH(CH₃)-, or -C(CH₃)₂-. In some embodiments, the C₁-C₃ alkylene group is -CH₂-, -CH₂CH₂-, or -C(CH₃)₂-, which facilitates preparation of the sulfonate ester compound and promotes decomposition of the sulfonate ester compound to form a stable SEI film.

In an implementation of this disclosure, the C₁-C₃ alkyl group refers to an alkyl group having 1 to 3 carbon atoms. Specifically, the C₁-C₃ alkyl group may be -CH₃, -CH₂CH₃, - CH₂CH₂CH₃, or -CH(CH₃)₂. In some embodiments, the C₁-C₃ alkyl group is -CH₃, -CH₂CH₃, - CH₂CH₂CH₃, or -CH(CH₃)₂, which facilitates preparation of the sulfonate ester compound and promotes decomposition of the sulfonate ester compound to form a stable SEI film.

In an implementation of this disclosure, the C₁-C₃ fluoroalkyl group refers to a fluoroalkyl group having 1 to 3 carbon atoms, where a number of fluorine atoms may range from 1 to 7. In some implementations, the C₁-C₃ fluoroalkyl group may be monofluoromethyl, difluoromethyl, trifluoromethyl, difluoroethyl, trifluoroethyl, tetrafluoroethyl, pentafluoroethyl, trifluoropropyl, tetrafluoropropyl, pentafluoropropyl, hexafluoropropyl, or perfluoropropyl. Specifically, the C₁-C₃ fluoroalkyl group may be -CF₃, -CHF₂, -CH₂F, -CH₂CHF₂, -CH₂CF₃, - CF₂CHF₂, -CF₂CF₃, -CH₂CH₂CF₃, -CH₂CF₂CHF₂, -CH₂CF₂CF₃, -CF₂CHFCF₃, or -CF₂CF₂CF₃. In some embodiments, the C₁-C₃ fluoroalkyl group is -CF₃, -CHF₂, or -CH₂F, which facilitates preparation of the sulfonate ester compound and promotes decomposition of the sulfonate ester compound to form a stable SEI film.

In an implementation of this disclosure, in formula (I), R₂ and R₃ may be the same or different groups, for example, R₂ and R₃ are both methyl -CH₃; in formula (II), R₄ and R₇ may be the same or different groups, and R₅ and R₆ may also be the same or different groups; and in formula (III), R₉ and R₁₀ may be the same or different groups, and R₈ and R₁₁ may also be the same or different groups.

In an implementation of this disclosure, in formula (I), R₁ is -CH₂-, -CH₂CH₂-, or - C(CH₃)₂-, and R₂ and R₃ are -CH₃, -CH₂CH₃, -CH₂CH₂CH₃, -CH(CH₃)₂, -CF₃, -CHF₂, or -CH₂F.

In an implementation of this disclosure, in formula (II), R₄ and R₇ are independently - CH₃, -CH₂CH₃, -CH₂CH₂CH₃, -CH(CH₃)₂, -CF₃, -CHF₂, or -CH₂F, and R₅ and R₆ are independently -CH₂-, -CH₂CH₂-, or -C(CH₃)₂-.

In an implementation of this disclosure, in formula (III), R₈ and R₁₁ are independently -CH₃, -CH₂CH₃, -CH₂CH₂CH₃, -CH(CH₃)₂, -CF₃, -CHF₂, or -CH₂F, and R₉ and R₁₀ are independently -CH₂-, -CH₂CH₂-, or -C(CH₃)₂-.

In some specific implementations, the sulfonate ester compound includes one of compounds shown in formula (I-1), formula (II-1), and formula (III-1): 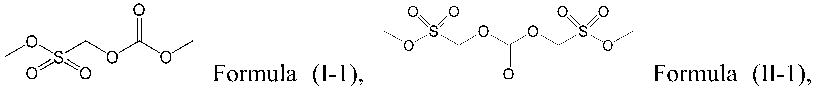 and

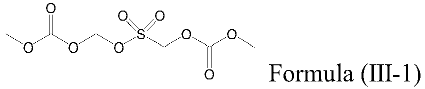

In an implementation of this disclosure, a volume percentage of the sulfonate ester compound in the sodium-ion battery electrolyte solution may range from 0.1% to 20%, which can improve structural stability of the SEI film on the electrode surface, avoid generation of side reactions, and help control costs. In some implementations, a volume percentage of the sulfonate ester compound in the sodium-ion battery electrolyte solution may be 0.1%, 0.5%, 0.8%, 1%, 2%, 3%, 4%, 5%, 6%, 7%, 8%, 9%, 10%, 12, 14, 16, 18, or 20%.

In an implementation of this disclosure, the sodium-ion battery electrolyte solution includes one or more of compounds shown in formula (I), formula (II), and formula (III). In the sodium-ion battery electrolyte solution, a volume percentage of the compound shown in formula (I) may range from 0% to 20%. Specifically, the volume percentage of the compound shown in formula (I) may be, for example, 0.1%, 0.5%, 0.8%, 1%, 2%, 3%, 4%, 5%, 6%, 7%, 8%, 9%, 10%, 12%, 14%, 16%, 18%, or 20%. A volume percentage of the compound shown in formula (II) may range from 0% to 10%. Specifically, the volume percentage of the compound shown in formula (II) may be, for example, 1%, 2%, 3%, 4%, 5%, 6%, 7%, 8%, 9%, or 10%. A volume percentage of the compound shown in formula (III) may range from 0% to 10%. Specifically, the volume percentage of the compound shown in formula (III) may be, for example, 1%, 2%, 3%, 4%, 5%, 6%, 7%, 8%, 9%, or 10%.

The compounds shown in formulas (I), (II), and (III) may be used alone or in combination. In an implementation of this disclosure, the sodium-ion battery electrolyte solution includes the compound shown in formula (I) but excludes the compounds shown in formula (II) and formula (III), and a volume percentage of the compound shown in formula (I) in the sodium-ion battery electrolyte solution may range from 0.1% to 20%. In another implementation of this disclosure, the sodium-ion battery electrolyte solution includes the compound shown in formula (II) but excludes the compounds shown in formula (I) and formula (III), and a volume percentage of the compound shown in formula (II) in the sodium-ion battery electrolyte solution may range from 0.1% to 10%. In a further implementation of this disclosure, the sodium-ion battery electrolyte solution includes the compound shown in formula (III) but excludes the compounds shown in formula (I) and formula (II), and a volume percentage of the compound shown in formula (III) in the sodium-ion battery electrolyte solution may range from 0.1% to 10%. In a further implementation of this disclosure, the sodium-ion battery electrolyte solution includes the compounds shown in formula (I) and formula (II) but excludes the compound shown in formula (III); and in the sodium-ion battery electrolyte solution, a volume percentage of the compound shown in formula (I) may range from 0.1% to 19.9%, and a volume percentage of the compound shown in formula (II) may range from 0.1% to 10%. In a further implementation of this disclosure, the sodium-ion battery electrolyte solution includes the compounds shown in formula (I) and formula (III) but excludes the compound shown in formula (II); and in the sodium-ion battery electrolyte solution, a volume percentage of the compound shown in formula (I) may range from 0.1% to 19.9%, and a volume percentage of the compound shown in formula (III) may range from 0.1% to 10%. In a further implementation of this disclosure, the sodium-ion battery electrolyte solution includes the compounds shown in formula (II) and formula (III), but excludes the compound shown in formula (I); and in the sodium-ion battery electrolyte solution, a volume percentage of the compound shown in formula (II) may range from 0.1% to 10%, and a volume percentage of the compound shown in formula (III) may range from 0.1% to 10%. In a further implementation of this disclosure, the sodium-ion battery electrolyte solution includes the compounds shown in formula (I), formula (II) and formula (III); and in the sodium-ion battery electrolyte solution, a volume percentage of the compound shown in formula (I) may range from 0.1% to 19.8%, a volume percentage of the compound shown in formula (II) may range from 0.1% to 10%, and a volume percentage of the compound shown in formula (III) may range from 0.1% to 10%.

It should be noted that volume percentages of components in the sodium-ion battery electrolyte solution in this application are percentages of volumes of the components relative to a volume of the electrolyte solution excluding the sodium salt.

In an implementation of this disclosure, a main function of the sodium salt is to provide sodium-ions to ensure that the battery has enough sodium-ions during charging and discharging. These sodium-ions are transported between the positive and negative electrodes and are inserted into and deintercalated into a negative electrode material during charging and discharging. In some implementations, the sodium salt includes one or more of sodium hexafluorophosphate, sodium perchlorate, sodium bis(trifluoromethanesulfonyl)imide, sodium bis(fluorosulfonyl)imide, sodium trifluoromethanesulfonate, sodium difluorooxalateborate, sodium bis(oxalateborate), sodium hexafluoroarsenate, sodium tetrafluoroborate, sodium nitrate, and sodium chloride.

In an implementation of this disclosure, a concentration of the sodium salt in the sodium-ion battery electrolyte solution may range from 0.1 mol/L to 10 mol/L, which can ensure electrochemical performance of the electrolyte solution, avoid a waste of the sodium salt, and help control costs. In some implementations, the concentration of the sodium salt in the sodium-ion battery electrolyte solution may be 0.1 mol/L, 0.5 mol/L, 1 mol/L, 1.5 mol/L, 2 mol/L, 2.5 mol/L, 3 mol/L, 3.5 mol/L, 4 mol/L, 5 mol/L, 6 mol/L, 7 mol/L, 8 mol/L, 9 mol/L, or 10 mol/L.

In an implementation of this disclosure, the sodium-ion battery electrolyte solution further includes one or more of a solvent, an additive, and a diluent, which helps further improve electrochemical performance of the sodium-ion battery electrolyte solution.

In an implementation of this disclosure, the solvent may be one or more of ethylene carbonate, propylene carbonate, dimethyl carbonate, diethyl carbonate, methyl ethyl carbonate, ethylene glycol dimethyl ether, diethylene glycol dimethyl ether, triethylene glycol dimethyl ether, 1,3-dioxolane, methyl acetate, ethyl acetate, ethyl propionate, propyl propionate, dimethyl sulfoxide, tetrahydrofuran, acetonitrile, and N,N-dimethylformamide. The solvent mentioned above can help transfer cations and anions in the battery, thereby making the electrolyte solution more conductive.

In an implementation of this disclosure, a volume percentage of the solvent in the sodium-ion battery electrolyte solution may range from 40% to 99%, which can improve conductivity of the electrolyte solution without affecting stability at an electrolyte solution/electrode interface. In some implementations, the volume percentage of the solvent may be 40%, 45%, 50%, 55%, 60%, 65%, 70%, 75%, 80%, 85%, 90%, 95%, 98%, or 99%.

In an implementation of this disclosure, the additive includes one or more of a film-forming additive, a flame retardant, a dehydrating agent, and an overcharge protection additive. The film-forming additive can further improve stability at the electrolyte solution/electrode interface; the dehydrating agent can reduce moisture content and help inhibit formation of a harmful component; and the flame retardant and the overcharge protection additive can effectively reduce battery side reactions and ensure safe and stable operation of the battery. In some implementations, the additive may be one or more of fluoroethylene carbonate, vinylene carbonate, 1,3-propane sultone, propylene sulfate, prop-1-ene-1,3-sultone, ethylene sulfate, methylene methanedisulfonate, succinonitrile, adiponitrile, tris(trimethylsilane) phosphite, trimethyl phosphate, and ethoxy(pentafluoro)cyclotriphosphazene.

In an implementation of this disclosure, the volume percentage of the additive in the sodium-ion battery electrolyte solution may range from 1% to 20%, which can further improve electrode stability and safety of the battery without affecting energy density of the battery. In some implementations, the volume percentage of the additive in the sodium-ion battery electrolyte solution may be 1%, 1.5%, 2%, 3%, 4%, 5%, 8%, 10%, 12%, 15%, 18%, or 20%.

In an implementation of this disclosure, the diluent includes one or more of 1,1,2,2-tetrafluoroethyl-2,2,2-trifluoroethyl ether, 1,1,2,2-tetrafluoroethyl-2,2,3,3-tetrafluoropropyl ether and bis(2,2,2-trifluoroethyl) ether. Adding the diluent to the sodium-ion electrolyte solution can create a locally high-concentration electrolyte solution system, reducing system viscosity and further improving film-forming stability.

In an implementation of this disclosure, a volume percentage of the diluent in the sodium-ion battery electrolyte solution may range from 0 to 45%, which can reduce viscosity of the electrolyte solution and enhance stability at the electrolyte solution/electrode interface without affecting energy density of the battery. In some implementations, the volume percentage of the diluent in the sodium-ion battery electrolyte solution may be 0%, 10%, 20%, 30%, 40%, or 45%.

In an implementation of this disclosure, the sodium-ion battery electrolyte solution may be added with the solvent, the additive, and the diluent to synergistically improve safety, stability, and electrochemical performance of the electrolyte solution.

An embodiment of this disclosure further provides a sodium-ion battery, including a positive electrode, a negative electrode, a separator located between the positive electrode and the negative electrode, and an electrolyte solution, where the electrolyte solution includes the sodium-ion battery electrolyte solution according to any one of the foregoing implementations.

The electrolyte solution of the sodium-ion battery provided in this embodiment of this disclosure includes a sulfonate ester compound, which can promote formation of a uniform and stable SEI film on a surface of the battery electrode. In addition, the SEI film has good corrosion resistance, which helps suppress generation of side reactions and loss of active lithium, thereby improving a cycle life and rate performance of the battery.

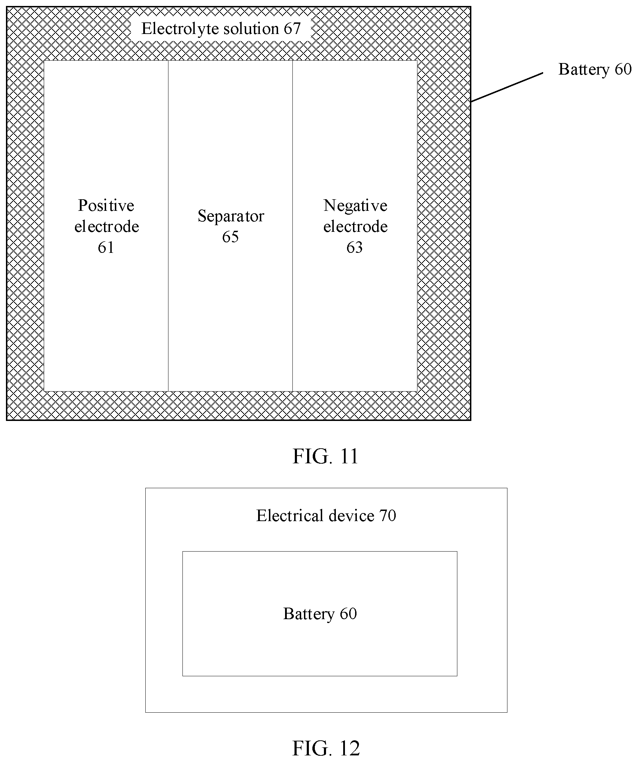

An embodiment of this disclosure further provides an electrical device. FIG. 12 is a block diagram of the electrical device. As shown in FIG. 12, the electrical device 70 includes the sodium-ion battery 60 in any one of the foregoing implementations. Specifically, the electrical device may be an electric vehicle, an electric motorcycle, an electric bicycle, a portable power source, an unmanned aerial vehicle, a mobile phone, a computer, a camera, an electric power tool, a smart home device, or a wearable device.

The electrical device provided in this embodiment of this disclosure includes a sodium-ion battery. This sodium-ion battery has a long cycle life and good rate performance, allowing the electrical device to be used stably for a long time, thereby helping improve use performance of the electrical device.

The technical solutions of this disclosure are further explained below through specific embodiments and comparative examples.

### Example 1

Methyl(methyl carbonate)methanesulfonate shown in formula (I-1) and dimethyl carbonate were mixed according to a volume ratio of 1:4 to prepare an electrolyte mother liquor. Water was removed from the mother liquor by a molecular sieve, and then sodium hexafluorophosphate was added to the dry and anhydrous electrolyte mother liquor in batches while stirring. Finally, a clear, colorless, and transparent sodium-ion battery electrolyte solution with a sodium hexafluorophosphate concentration of 1 mol/L was obtained.

### Example 2

Methyl(methyl carbonate)methanesulfonate shown in formula (I-1), ethylene glycol dimethyl ether, and 1,1,2,2-tetrafluoroethyl-2,2,2-trifluoroethyl ether were mixed according to a volume ratio of 1:4:4 to prepare an electrolyte mother liquor. Water was removed from the mother liquor by a molecular sieve, and then sodium bis(fluorosulfonyl)imide was added to the dry and anhydrous electrolyte mother liquor in batches while stirring. Finally, a clear, colorless, and transparent sodium-ion battery electrolyte solution with a sodium bis(fluorosulfonyl)imide concentration of 1 mol/L was obtained.

### Example 3

Methyl(methyl carbonate)methanesulfonate shown in formula (I-1), ethylene carbonate, and dimethyl carbonate were mixed according to a volume ratio of 1:2:7 to prepare an electrolyte mother liquor. Water was removed from the mother liquor by a molecular sieve, and then sodium hexafluorophosphate was added to the dry and anhydrous electrolyte mother liquor in batches while stirring. Finally, a clear, colorless, and transparent sodium-ion battery electrolyte solution with a sodium hexafluorophosphate concentration of 1 mol/L was obtained.

### Example 4

Methyl(methyl carbonate)methanesulfonate shown in formula (I-1), ethylene carbonate, and dimethyl carbonate were mixed according to a volume ratio of 1:2:7 to prepare an electrolyte mother liquor. Water was removed from the mother liquor by a molecular sieve, and then sodium hexafluorophosphate was added to the dry and anhydrous electrolyte mother liquor in batches while stirring, to obtain an electrolyte solution with a sodium hexafluorophosphate concentration of 1 mol/L. After cooling, an additive fluoroethylene carbonate (FEC) with a volume fraction of 1% was added to the electrolyte solution to obtain a clear, colorless, and transparent sodium-ion battery electrolyte solution.

### Example 5

Ethylene carbonate and dimethyl carbonate were mixed according to a volume ratio of 1:4 to prepare an electrolyte mother liquor. Water was removed from the mother liquor by a molecular sieve, and then sodium hexafluorophosphate was added to the dry and anhydrous electrolyte mother liquor in batches while stirring, to obtain an electrolyte solution with a sodium hexafluorophosphate concentration of 1 mol/L. After cooling, methyl(methyl carbonate)methanesulfonate shown in formula (I-1) with a volume fraction of 1% was added to the electrolyte solution to obtain a clear, colorless, and transparent sodium-ion battery electrolyte solution.

### Example 6

Ethylene carbonate and dimethyl carbonate were mixed according to a volume ratio of 1:4 to prepare an electrolyte mother liquor. Water was removed from the mother liquor by a molecular sieve, and then sodium hexafluorophosphate was added to the dry and anhydrous electrolyte mother liquor in batches while stirring, to obtain an electrolyte solution with a sodium hexafluorophosphate concentration of 1 mol/L. After cooling, FEC with a volume fraction of 1% and methyl(methyl carbonate)methanesulfonate shown in formula (I-1) with a volume fraction of 1% were added to the electrolyte solution to obtain a clear, colorless, and transparent sodium-ion battery electrolyte solution.

### Example 7

Ethylene carbonate and dimethyl carbonate were mixed according to a volume ratio of 1:4 to prepare an electrolyte mother liquor. Water was removed from the mother liquor by a molecular sieve, and then sodium hexafluorophosphate was added to the dry and anhydrous electrolyte mother liquor in batches while stirring, to obtain an electrolyte solution with a sodium hexafluorophosphate concentration of 1 mol/L. After cooling, FEC with a volume fraction of 1% and the compound shown in formula (II-1) with a volume fraction of 1% were added to the electrolyte solution to obtain a clear, colorless, and transparent sodium-ion battery electrolyte solution.

### Example 8

Ethylene carbonate and dimethyl carbonate were mixed according to a volume ratio of 1:4 to prepare an electrolyte mother liquor. Water was removed from the mother liquor by a molecular sieve, and then sodium hexafluorophosphate was added to the dry and anhydrous electrolyte mother liquor in batches while stirring, to obtain an electrolyte solution with a sodium hexafluorophosphate concentration of 1 mol/L. After cooling, FEC with a volume fraction of 1% and the compound shown in formula (III-1) with a volume fraction of 1% were added to the electrolyte solution to obtain a clear, colorless, and transparent sodium-ion battery electrolyte solution.

### Comparative Example 1

Ethylene carbonate and dimethyl carbonate were mixed according to a volume ratio of 1:4 to prepare an electrolyte mother liquor. Water was removed from the mother liquor by a molecular sieve, and then sodium hexafluorophosphate was added to the dry and anhydrous electrolyte mother liquor in batches while stirring. Finally, a clear, colorless, and transparent sodium-ion battery electrolyte solution with a sodium hexafluorophosphate concentration of 1 mol/L was obtained.

### Comparative Example 2

Ethylene carbonate and dimethyl carbonate were mixed according to a volume ratio of 1:4 to prepare an electrolyte mother liquor. Water was removed from the mother liquor by a molecular sieve, and then sodium hexafluorophosphate was added to the dry and anhydrous electrolyte mother liquor in batches while stirring, to obtain an electrolyte solution with a sodium hexafluorophosphate concentration of 1 mol/L. After cooling, 1,3-propane sultone (PS) with a volume fraction of 1% was added to the electrolyte solution to finally obtain a clear, colorless, and transparent sodium-ion battery electrolyte solution.

### Comparative Example 3

Ethylene carbonate and dimethyl carbonate were mixed according to a volume ratio of 1:4 to prepare an electrolyte mother liquor. Water was removed from the mother liquor by a molecular sieve, and then sodium hexafluorophosphate was added to the dry and anhydrous electrolyte mother liquor in batches while stirring, to obtain an electrolyte solution with a sodium hexafluorophosphate concentration of 1 mol/L. After cooling, FEC with a volume fraction of 1% and 1,3-propane sultone (PS) with a volume fraction of 1% were added to the electrolyte solution to finally obtain a clear, colorless, and transparent sodium-ion battery electrolyte solution.

The sodium-ion battery electrolyte solutions provided in Examples 1 to 8 and Comparative Examples 1 to 3 above were separately assembled into pouch sodium-ion batteries according to the following methods.

Positive electrode sheet preparation: A sodium iron pyrophosphate (NFPP) positive electrode material, a polyvinylidene fluoride (PVDF) binder, and an acetylene black (SuperP) conductive agent were mixed according to a mass ratio of 8:1:1, and a particular amount of N-methylpyrrolidone (NMP) was added to prepare a positive electrode slurry. Solid content of the slurry was adjusted to approximately 50%. After defoaming and sieving, the slurry was uniformly coated onto a surface of aluminum foil. The positive electrode sheet was obtained after drying, calendering, and cutting.

Negative electrode sheet preparation: A hard carbon (HC) negative electrode material, a styrene-butadiene rubber (SBR)/carboxymethyl cellulose (CMC) composite binder, and an acetylene black (SuperP) conductive agent were mixed according to a mass ratio of 8:1:1, and deionized water was added to prepare a negative electrode slurry. Solid content of the slurry was adjusted to approximately 45%. After degassing and sieving, the slurry was uniformly coated onto a surface of aluminum foil. The negative electrode sheet was obtained after drying, calendering, and cutting.

Pouch battery preparation: The negative electrode sheet, a separator, and the positive electrode sheet were stacked in sequence to form a cell, which was then packaged in an aluminum-plastic shell. After the cell was baked to remove moisture, the sodium-ion battery electrolyte solutions of Examples 1 to 8 and Comparative Examples 1 to 3 were respectively injected into pouch batteries. After aging, formation, and capacity grading, pouch sodium-ion batteries in Examples 1 to 8 and Comparative Examples 1 to 3 were obtained.

FIG. 11 is a schematic block diagram of a sodium-ion battery according to an embodiment of this disclosure. As shown in FIG. 11, the sodium-ion battery 60 (referred to as battery 60 for short) includes a positive electrode 61, a negative electrode 63, a separator 65 located between the positive electrode and the negative electrode, and an electrolyte solution 67. The injected electrolyte solution is the sodium-ion battery electrolyte solution of Examples 1 to 8 and Comparative Examples 1 to 3.

### 1. Electrochemical performance testing

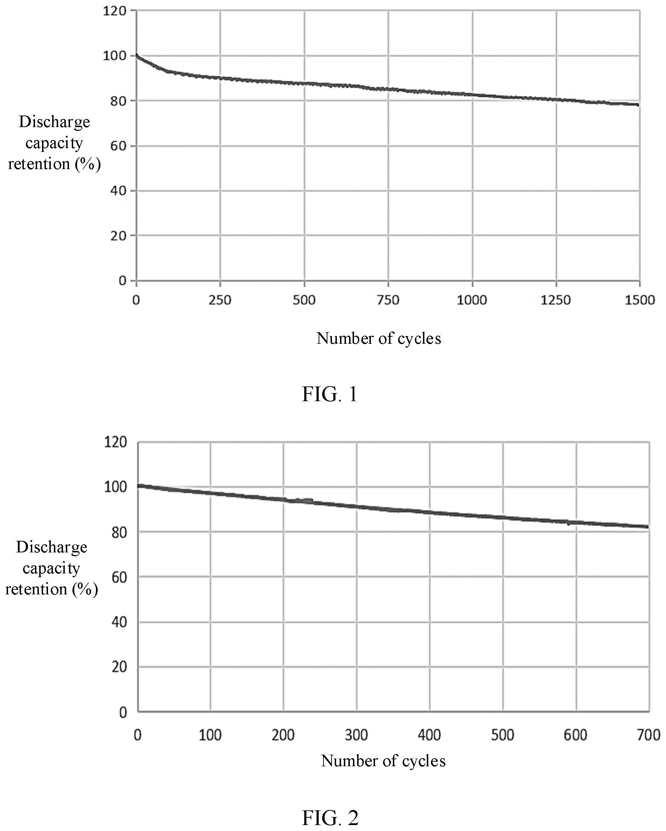

At 25°C, the foregoing pouch sodium-ion batteries were charged to 3.6V at a constant current density of 1C and a constant voltage, and then discharged to 1.5V at a constant current density of 1C. Initial discharge capacity, first-time efficiency, and capacity retention after 500 cycles were tested for each pouch sodium-ion battery. The test results are shown in Table 1. Cycle performance graphs of Example 4, Example 6, and Comparative Example 3 are shown in FIG. 1 to FIG. 3.

**Table 1 Electrochemical performance test results**

| Sequence number | Volume percentage of each component in sodium-ion battery electrolyte solution (%) | | | | Initial discharge capacity (Ah) | First-time efficiency (%) | Capacity retention after 500 cycles at 1C (%) |
|---|---|---|---|---|---|---|---|
| | Sulfonate ester compound | Solvent | Additive | Diluent | | | |
| Example 1 | 20.00 | 80.00 | 0 | 0 | 1.155 | 78.59 | 83.17 |
| Example 2 | 11.11 | 44.44 | 0 | 44.44 | 1.134 | 77.14 | 74.86 |
| Example 3 | 10 | 90 | 0 | 0 | 1.230 | 83.67 | 87.15 |
| Example 4 | 9.9 | 89.1 | 1 | 0 | 1.245 | 84.69 | 87.40 |
| Example 5 | 1 | 99 | 0 | 0 | 1.207 | 82.10 | 81.22 |
| Example 6 | 1 | 98 | 1 | 0 | 1.211 | 82.41 | 84.10 |
| Example 7 | 1 | 98 | 1 | 0 | 1.103 | 75.03 | 69.20 |
| Example 8 | 1 | 98 | 1 | 0 | 1.120 | 76.19 | 71.63 |
| Comparative Example 1 | 0 | 100 | 0 | 0 | 0.962 | 65.44 | Below 30% |
| Comparative Example 2 | 0 | 99 | 1 | 0 | 1.097 | 74.65 | 47.89 |
| Comparative Example 3 | 0 | 98 | 2 | 0 | 1.122 | 76.30 | 60.86 |

It can be seen from Table 1 that, compared with Comparative Examples 1 to 3, the sodium-ion batteries made with the sodium-ion battery electrolyte solutions provided embodiments of this disclosure have higher initial discharge capacity, first-time efficiency, and capacity retention after 500 cycles at 1C. This indicates that these sodium-ion batteries have less irreversible active sodium loss and good cycle stability, which is beneficial to long-term stable use of the sodium-ion batteries. It can be seen from Examples 6 to 8 that Example 6 has the best initial discharge capacity, first-time efficiency, and capacity retention, indicating that the compound shown in formula (I-1) has a better capability to improve battery electrochemical performance than the compounds shown in formulas (II-1) and (III-1). It can be seen from Examples 3 and 4 that the sulfonate ester compounds provided in embodiments of this disclosure, in combination with other film-forming additives, can further improve electrochemical performance of sodium-ion batteries.

It can be seen from FIG. 1 to FIG. 3 that before the capacity retention drops to 80%, the sodium-ion battery in Example 4 can cycle more than 1250 times, the sodium-ion battery in Example 6 can cycle more than 700 times, while the sodium-ion battery in Comparative Example 3 can cycle only 200 times. This shows that the sodium-ion batteries provided in embodiments of this disclosure have better capacity retention and a longer cycle life, which is beneficial to long-term stable use of sodium-ion batteries.

### 2. SEI film characterization

### (1) Characterization by X-ray photoelectron spectroscopy (XPS)

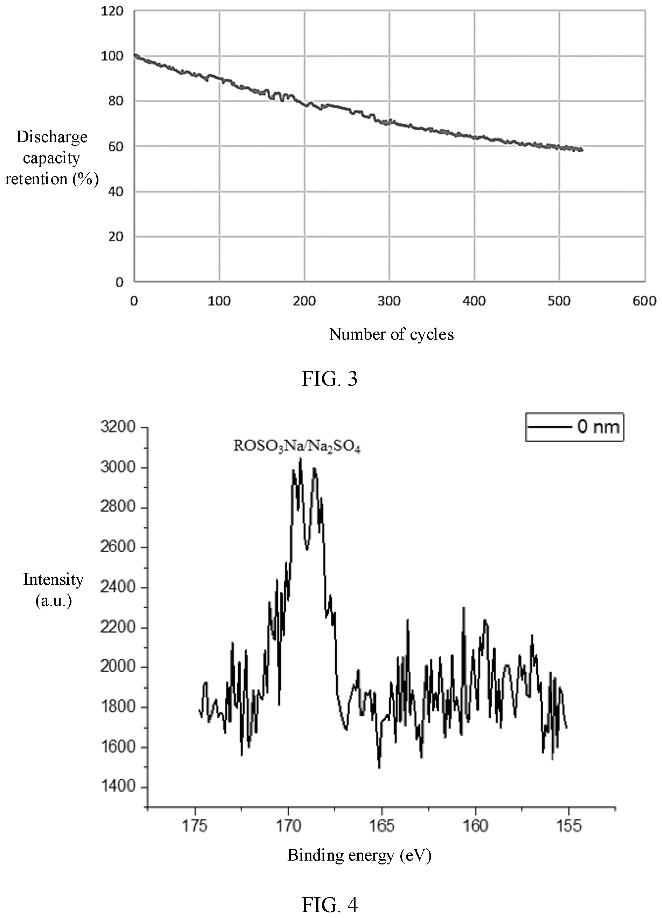

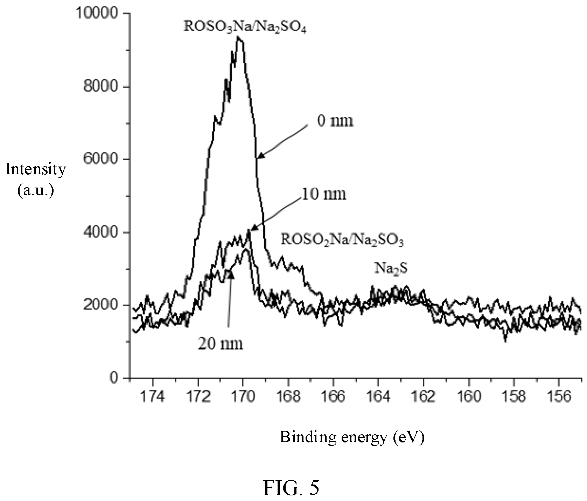

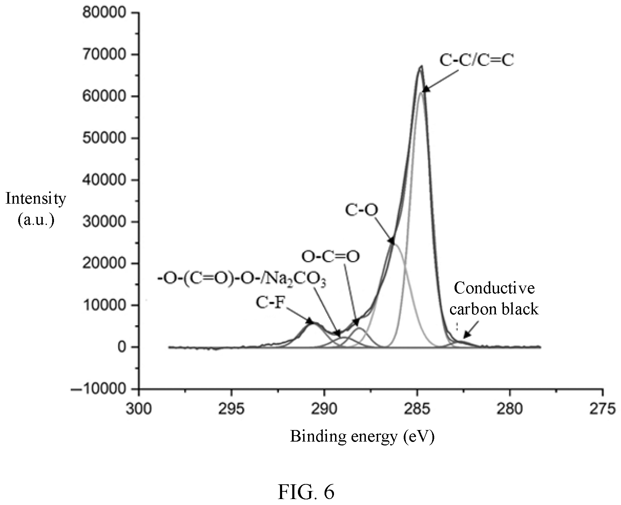

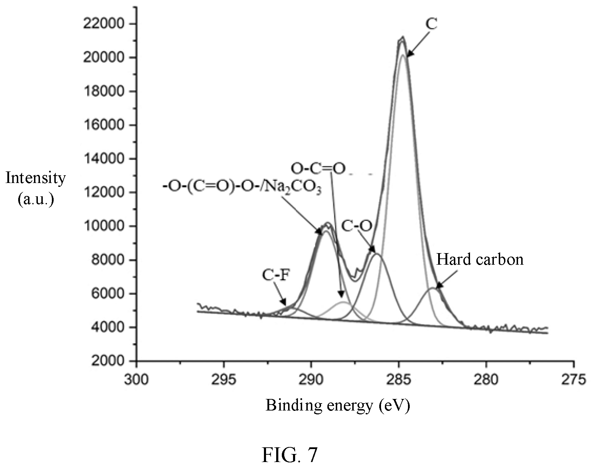

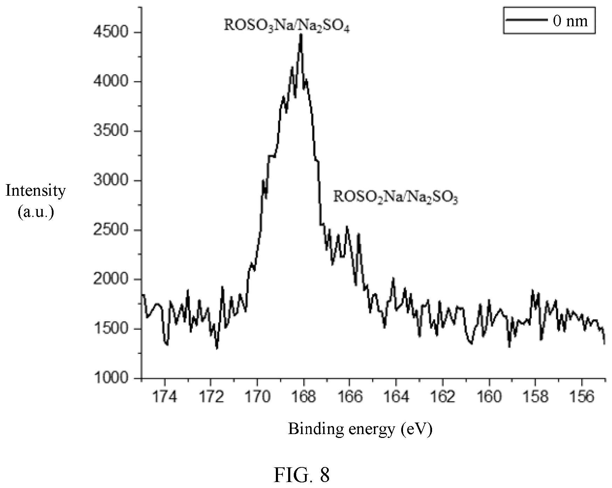

XPS characterization was performed on SEI films on positive and negative electrode surfaces of the sodium-ion batteries in Example 6 and Comparative Example 3. The results are shown in FIG. 4 to FIG. 9. It can be seen from FIG. 4, FIG. 5, FIG. 8, and FIG. 9 that SEI films in both Example 6 and Comparative Example 3 include products such as ROSO₃Na/Na₂SO₄, ROSO₂Na/Na₂SO₃, and Na₂S but content of ROSO₃Na/Na₂SO₄ is higher in Example 6, indicating that the sodium-ion battery electrolyte solution provided in examples of this disclosure can promote formation of a stable SEI film rich in sulfate and sulfite on an electrode surface, which helps improve electrode stability. Furthermore, it can be seen from FIG. 6 and FIG. 7 that the SEI film in Example 6 further includes a larger amount of Na₂CO₃ inorganic products. This is mainly because methyl(methyl carbonate)methanesulfonate combines carbonate ester and sulfonate ester groups to jointly regulate SEI film composition, generating more inorganic products. This helps reduce solubility of the SEI film and improve structural stability of the positive and negative electrodes.

### (2) Characterization of longitudinal distribution of Na₂SO₄

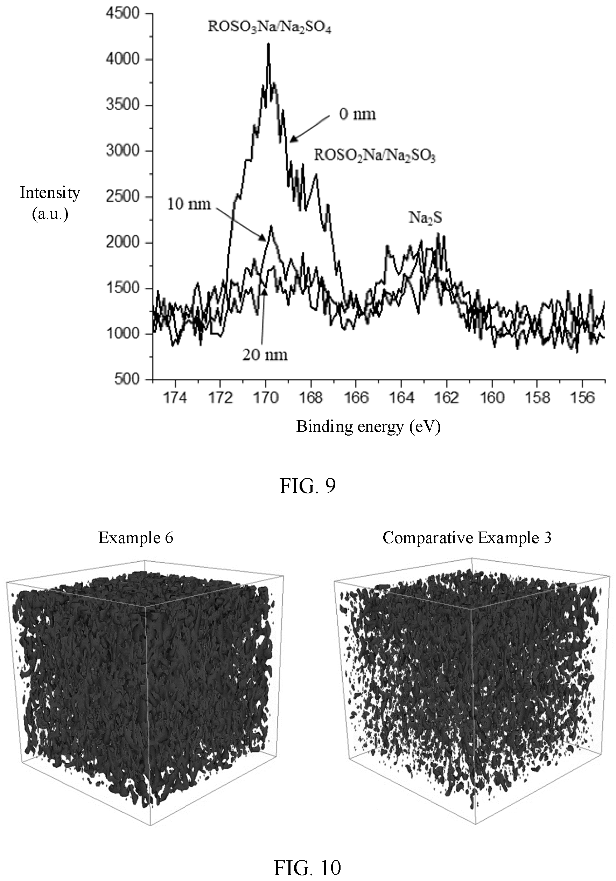

Longitudinal (that is, in a thickness direction) distribution of Na₂SO₄ in negative electrode SEI films of sodium-ion batteries in Example 6 and Comparative Example 3 was characterized by using time-of-flight secondary ion mass spectrometry (TOF-SIMS). The results are shown in FIG. 10. Na₂SO₄ in the negative electrode in Example 6 can penetrate deep into the SEI film and is uniformly distributed throughout the SEI film. In contrast, Na₂SO₄ in the negative electrode in Comparative Example 3 is unevenly distributed and has a lower content throughout the SEI film. This indicates that the sodium-ion battery electrolyte solution provided in embodiments of this disclosure can have an improved content and uniformity of sulfate in the SEI film, which helps improve structural stability of the negative electrode of the battery, thereby extending a cycle life of the battery.

The foregoing embodiments merely describe several implementations of this application, and the description thereof is relatively specific and detailed, but shall not be construed as a limitation on the scope of this application patent. It should be noted that a person of ordinary skill in the art may further make several modifications and improvements without departing from the concept of this application, which all fall within the protection scope of this application. Therefore, the scope of protection of this application patent shall be subject to the appended claims.

## Claims

1. A sodium-ion battery electrolyte solution, wherein the sodium-ion battery electrolyte solution comprises a sodium salt and a sulfonate ester compound, wherein the sulfonate ester compound comprises one or more of compounds shown in formula (I), formula (II), and formula (III): 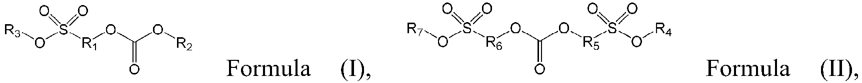 and 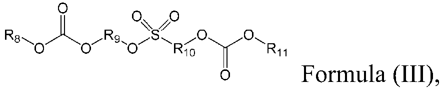 wherein R₁, R₅, R₆, R₉ and R₁₀ are selected from C₁-C₃ alkylene groups, and R₂, R₃, R₄, R₇, R₈ and R₁₁ are selected from C₁-C₃ alkyl groups or C₁-C₃ fluoroalkyl groups.

2. The sodium-ion battery electrolyte solution according to claim 1, wherein the C₁-C₃ alkylene group is -CH₂-, -CH₂CH₂-, or -C(CH₃)₂-; and the C₁-C₃ alkyl group is -CH₃, -CH₂CH₃, - CH₂CH₂CH₃, or -CH(CH₃)₂, and the C₁-C₃ fluoroalkyl group is -CF₃, -CHF₂, or -CH₂F.

3. The sodium-ion battery electrolyte solution according to claim 1, wherein a volume percentage of the sulfonate ester compound in the sodium-ion battery electrolyte solution ranges from 0.1% to 20%.

4. The sodium-ion battery electrolyte solution according to claim 3, wherein in the sodium-ion battery electrolyte solution, a volume percentage of a compound shown in formula (I) ranges from 0% to 20%; a volume percentage of a compound shown in formula (II) ranges from 0% to 10%; and a volume percentage of a compound shown in formula (III) ranges from 0% to 10%.

5. The sodium-ion battery electrolyte solution according to claim 1, wherein the sodium salt comprises one or more of sodium hexafluorophosphate, sodium perchlorate, sodium bis(trifluoromethanesulfonyl)imide, sodium bis(fluorosulfonyl)imide, sodium trifluoromethanesulfonate, sodium difluorooxalateborate, sodium bis(oxalateborate), sodium hexafluoroarsenate, sodium tetrafluoroborate, sodium nitrate, and sodium chloride.

6. The sodium-ion battery electrolyte solution according to claim 1 or 5, wherein a concentration of the sodium salt in the sodium-ion battery electrolyte solution ranges from 0.1 mol/L to 10 mol/L.

7. The sodium-ion battery electrolyte solution according to any one of claims 1 to 6, wherein the sodium-ion battery electrolyte solution further comprises one or more of a solvent, an additive, and a diluent.

8. The sodium-ion battery electrolyte solution according to any one of claims 1 to 7, wherein the solvent comprises one or more of ethylene carbonate, propylene carbonate, dimethyl carbonate, diethyl carbonate, methyl ethyl carbonate, ethylene glycol dimethyl ether, diethylene glycol dimethyl ether, triethylene glycol dimethyl ether, 1,3-dioxolane, methyl acetate, ethyl acetate, ethyl propionate, propyl propionate, dimethyl sulfoxide, tetrahydrofuran, acetonitrile, and N,N-dimethylformamide.

9. The sodium-ion battery electrolyte solution according to any one of claims 1 to 8, wherein the additive comprises one or more of fluoroethylene carbonate, vinylene carbonate, 1,3-propane sultone, propylene sulfate, prop-1-ene-1,3-sultone, ethylene sulfate, methylene methanedisulfonate, succinonitrile, adiponitrile, tris(trimethylsilane) phosphite, trimethyl phosphate, and ethoxy(pentafluoro)cyclotriphosphazene.

10. The sodium-ion battery electrolyte solution according to any one of claims 1 to 9, wherein the diluent comprises one or more of 1,1,2,2-tetrafluoroethyl-2,2,2-trifluoroethyl ether, 1,1,2,2-tetrafluoroethyl-2,2,3,3-tetrafluoropropyl ether and bis(2,2,2-trifluoroethyl) ether.

11. The sodium-ion battery electrolyte solution according to any one of claims 7 to 10, wherein, in the sodium-ion battery electrolyte solution, a volume percentage of the solvent ranges from 40% to 99%; a volume percentage of the additive ranges from 1% to 20%; and a volume percentage of the diluent ranges from 0 to 45%.

12. A sodium-ion battery (60), comprising a positive electrode (61), a negative electrode (63), a separator (65) located between the positive electrode (61) and the negative electrode (63), and an electrolyte solution (67), wherein the electrolyte solution (67) comprises the sodium-ion battery electrolyte solution according to any one of claims 1 to 11.

13. An electrical device (70), wherein the electrical device comprises the sodium-ion battery (60) according to claim 12.
